# FASCICULE DE BREVET EUROPEEN

(11) **EP 2 188 762 B1**
(45) Date de publication et mention de la délivrance du brevet: **17.04.2013**
(21) Numéro de dépôt: 08853741.0
(22) Date de dépôt: 12.09.2008
(51) Int. Cl.: G06K 19/073, G06F 12/14

(54) **CARTE A CIRCUIT INTEGRE A TAMPON D'ENTREE/SORTIE SECURISE**
INTEGRIERTE LEITERPLATTE MIT GESICHERTEM EINGANGS- UND AUSGANGSPUFFER
INTEGRATED CIRCUIT BOARD WITH SECURED INPUT/OUTPUT BUFFER

(30) Priorité: 14.09.2007 FR 0706447
(43) Date de publication de la demande: 26.05.2010
(73) Titulaire: Morpho, 75015 Paris (FR)
(72) Inventeur: BAILLY, Alexis, F-95170 Deuil La Barre (FR); DECROIX, David, F-93100 Montreuil (FR); GONCALVES, Louis-Philippe, F-95170 Deuil La Barre (FR); PEPIN, Cyrille, F-78570 Andresy (FR); ROUDIERE, Guillaume, F-92100 Boulogne (FR)
(74) Mandataire: Lavialle, Bruno François Stéphane
(86) Numéro de dépôt international: PCT/FR2008/001276
(87) Numéro de publication internationale: WO 2009/068760

(56) Documents cités:
- EP-A- 0 331 407
- EP-A- 0 955 602
- EP-A- 1 615 164
- EP-A- 1 672 566
- US-A- 5 802 519

## Description

La présente invention concerne une carte à circuit intégré utilisable notamment comme support de données par exemple pour constituer un moyen d'identification du porteur de la carte, un moyen d'accès à un lieu ou un matériel, un moyen de paiement tel qu'une carte bancaire ou une carte de téléphone...

### ARRIERE PLAN DE L'INVENTION

Une carte à circuit intégré comporte généralement un corps sur lequel est fixé un circuit intégré comprenant une unité de traitement associée à une mémoire vive et à des moyens d'échange de données avec un dispositif externe tel qu'un lecteur de carte. Les moyens d'échange comportent par exemple des plages conductrices destinées à coopérer avec des électrodes du dispositif externe ou une antenne émettrice/réceptrice pour échanger des signaux électromagnétiques avec une antenne du dispositif externe. L'unité de traitement, un microprocesseur, effectue sur des données des opérations, et plus particulièrement des calculs cryptographiques, qui vont notamment permettre à l'unité de traitement de vérifier si elle est autorisée à engager une transaction avec le dispositif externe auquel les moyens d'échange la relient. La mémoire vive (ou RAM de l'anglais « Random Access Memory », mémoire à accès aléatoire) est utilisée pour la mémorisation des données qui sont échangées avec le dispositif externe et des données de fonctionnement interne telles que des résultats intermédiaires qui sont réutilisées dans les opérations effectuées par l'unité de traitement.

EP-A-1 672 566 divulgue une carte à circuit intégré comprenant une unité de traitement associée à une mémoire vive et à des moyens d'échange de données avec un dispositif externe. La mémoire vive comporte une zone de mémorisation dédiée aux données échangées. Les caractéristiques dans le préambule des revendications 1 et 5 sont connues de EP-A1 672 566.

De telles cartes renferment parfois des informations confidentielles, telles qu'un code secret, ou permettant l'accès à des lieux ou des équipements contenant de telles informations, et sont parfois soumises à des tentatives de fraude qui visent à perturber le fonctionnement de l'unité de traitement pour amener celle-ci à communiquer vers l'extérieur des données confidentielles ou pour révéler son mode de fonctionnement.

Ces tentatives de fraude sont généralement réalisées en exploitant la mémoire vive pour y faire enregistrer des morceaux d'instructions, inoffensifs pris individuellement, que l'unité de traitement sera amenée à assembler constituant ainsi une instruction mettant en péril la sécurité de la carte ; ou pour y récupérer des informations que l'unité de traitement a mémorisées temporairement et qui ne sont normalement pas destinées à être transmises à l'extérieur.

### OBJET DE L'INVENTION

Un but de l'invention est de fournir un moyen permettant de contrôler l'échange d'informations avec l'extérieur afin d'assurer une protection de la carte.

### RESUME DE L'INVENTION

A cet effet on prévoit, selon l'invention, une carte à circuit intégré selon la revendication 1.

Les données échangées sont les données reçues ou à émettre. Ainsi, seules les données échangées sont contenues dans la zone de mémorisation dédiée et pourront être échangées avec l'extérieur. La sécurisation logicielle assurée par l'unité de traitement permet de limiter le risque que cette zone contienne des données nuisibles pour la sécurité de la carte, c'est-à-dire soit des morceaux d'instructions, inoffensifs pris individuellement, et constituant une instruction malveillante une fois rassemblés, soit des données de fonctionnement interne ne devant normalement pas être communiquées à l'extérieur. L'unité de traitement empêche la présence simultanée de ces morceaux d'instructions en mémoire et la mémorisation de ces données de fonctionnement interne. Le fait d'avoir une zone de mémorisation dédiée facilite la surveillance en limitant le nombre d'octets potentiellement dangereux et n'a pas une incidence notable sur les performances de la carte.

Selon l'invention, l'unité de traitement est programmée pour brouiller les données de la zone de mémorisation dédiée avant un transfert de données depuis l'extérieur.

Ainsi, on évite que des données reçues par la carte pour une première commande puissent être utilisées en combinaison avec des données reçues pour une deuxième commande, ou utilisées directement. Des données successivement reçues par la carte ne peuvent donc être recombinées ou utilisées pour former une instruction malveillante.

Selon une caractéristique préférée, l'unité de traitement est programmée pour verrouiller l'accès à la zone de mémorisation dédiée lors d'une opération de traitement.

Ainsi, lors de son fonctionnement, l'unité de traitement ne peut enregistrer de données dans la zone de mémorisation dédiée, éliminant le risque que de telles données, et plus particulièrement des données secrètes ou sensibles, soient par la suite transmises à l'extérieur.

Avantageusement alors, l'unité de traitement est programmée pour évaluer un état des données de la zone de mémorisation dédiée avant de réaliser une opération de traitement et de vérifier l'intégrité des données après l'opération de traitement.

Tout enregistrement de données dans la zone de mémorisation dédiée entraînerait alors un défaut d'intégrité de cette zone et révèlerait une tentative de fraude.

L'invention a également pour objet un procédé selon la revendication 5.

D'autres caractéristiques et avantages de l'invention ressortiront à la lecture de la description qui suit d'un mode de réalisation particulier non limitatif de l'invention.

### BREVE DESCRIPTION DES DESSINS

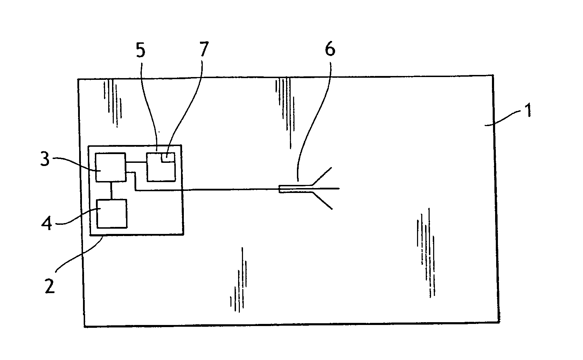

Il sera fait référence à la figure unique représentant schématiquement une carte conforme à l'invention.

### DESCRIPTION DETAILLEE DE L'INVENTION

En référence à la figure, la carte comprend, de façon connue en soi, un corps 1 auquel est fixé un circuit intégré 2 comprenant une unité de traitement 3, sous la forme d'un microprocesseur, une mémoire morte 4, de type ROM (de l'anglais « Read Only Memory », mémoire à lecture seule) et une mémoire vive 5 de type RAM (de l'anglais « Random Access Memory », mémoire à accès aléatoire). La mémoire morte 4 contient un programme d'exploitation (ou plusieurs) qui est destiné à être exécuté par l'unité de traitement 3 afin de permettre à celle-ci d'effectuer des opérations prédéterminées. Cette opération comprend des opérations de réception de données, des opérations de traitement des données et des opérations de transmission de données. Les opérations de traitement en question sont par exemple des calculs cryptographiques et des procédures d'authentification. La mémoire vive 5 est utilisée par l'unité de traitement 3 pour y mémoriser des données. Le circuit intégré 2 est relié à une antenne 6 constituant un moyen d'échange de données avec un dispositif externe D formé ici d'un lecteur de carte sans contact.

Une zone de mémorisation dédiée aux données échangées est définie dans la mémoire vive 5. La zone de mémorisation dédiée, référencée 7, est bornée de sorte qu'elle ne puisse être étendue lors du fonctionnement de l'unité de traitement 3.

Le programme d'exploitation exécuté par l'unité de traitement 3 est agencé pour obliger l'unité de traitement 3 à enregistrer dans la zone de mémorisation dédiée 7 les données échangées, c'est-à-dire les données qu'elle reçoit de l'antenne 6 et les données qu'elle s'apprête à transmettre au dispositif externe D via l'antenne 6.

L'unité de traitement 3 est programmée pour vérifier avant une émission d'une donnée que la donnée est contenue dans la zone de mémorisation dédiée 7.

Le programme d'exploitation est également agencé pour que, préalablement à chaque réception de données, l'unité de traitement 3 altère les données contenues dans la zone de mémorisation dédiée 7. Cette altération consiste à brouiller ("scramble") les données contenues dans cette zone. Cette opération est assimilable à un effacement desdites données.

Le programme d'exploitation de l'unité de traitement 3 est en outre agencé pour verrouiller la zone de mémorisation dédiée 7 pendant les opérations effectuées par l'unité de traitement 3. Ce verrouillage consiste ici, en premier lieu, à interdire à l'unité de traitement 3, par le programme d'exploitation, de mémoriser des informations dans la zone de mémorisation dédiée 7 lors d'opérations de traitement. En second lieu, le verrouillage comprend les étapes d'évaluer un état des données de la zone de mémorisation dédiée 7 avant de réaliser une opération de traitement et de vérifier l'intégrité des données contenues dans la zone de mémorisation dédiée 7 après l'opération de traitement. Cette vérification d'intégrité est effectuée en calculant un polynôme sur les octets présents dans la zone de mémorisation dédiée 7 avant l'opération de traitement et en recalculant ce polynôme après l'opération de traitement. Il ne reste plus alors qu'à comparer les deux polynômes obtenus. Ce polynôme, également appelé checksum ou code de redondance cyclique (issu du procédé CRC de l'anglais « Cyclic Redundancy Checks » pour contrôle de redondance cyclique) est obtenu de manière classique en traitant un bloc de données comme une suite de coefficients binaires d'un polynôme. Ainsi, toute mémorisation de données effectuée après le calcul d'intégrité modifiera la valeur de celui-ci. La vérification d'intégrité révèlera cette mémorisation non autorisée indicative d'un dysfonctionnement.

La carte conforme à l'invention comprend ainsi une mémoire vive pourvue d'une zone de mémorisation dédiée des données échangées et une sécurité logicielle assurant un contrôle de la mémorisation de données dans cette zone.

On notera que la carte conforme à l'invention ne nécessite qu'une seule zone de mémoire dédiée à l'échange des données, cette zone de mémoire contenant les données échangées.

Bien entendu, l'invention n'est pas limitée au mode de réalisation décrit et on peut y apporter des variantes de réalisation sans sortir du cadre de l'invention tel que défini par les revendications.

En particulier, l'invention est applicable à tout type de cartes, et notamment à des cartes à contact possédant des plages conductrices pour coopérer avec des électrodes d'un lecteur de carte.

Les modes de sécurisation décrits peuvent être utilisés indépendamment les uns des autres ou en combinaison.

D'autres modes de vérification d'intégrité sont utilisables.

## Revendications

1. Carte à circuit intégré comprenant une unité de traitement (3) associée à une mémoire vive (5) et à des moyens d'échange (6) de données avec un dispositif externe (D), la mémoire vive comportant une unique zone de mémorisation (7) dédiée aux données échangées et l'unité de traitement étant agencée pour enregistrer dans la zone de mémorisation dédiée les données échangées et pour limiter le risque que ladite zone de mémorisation dédiée contienne des données nuisibles pour la sécurité de la carte, la carte étant **caractérisé en ce que** l'unité de traitement (3) est programmée pour brouiller les données de la zone de mémorisation dédiée (7) avant un transfert de données depuis l'extérieur afin que des données successives reçues par la carte ne puissent être recombinées ou utilisées pour former une instruction malveillante.

2. Carte à circuit intégré selon la revendication 1, dans laquelle l'unité de traitement (3) est programmée pour verrouiller l'accès à la zone de mémorisation dédiée (7) lors d'une opération de traitement afin que des données secrètes ou sensibles ne puissent être transmises à l'extérieur par la carte.

3. Carte selon la revendication 2 dans laquelle l'unité de traitement (3) est programmée pour calculer une intégrité sur les données de la zone de mémorisation dédiée (7) avant de réaliser une opération de traitement et pour vérifier l'intégrité des données après l'opération de traitement.

4. Carte selon la revendication 1, dans laquelle l'unité de traitement (3) est programmée pour vérifier avant une émission d'une donnée que la donnée est contenue dans la zone de mémorisation dédiée (7).

5. Procédé de gestion d'une mémoire vive (5) d'une carte à circuit intégré (2) comportant une unité de traitement (3) à laquelle sont associés la mémoire vive et des moyens d'échange (6) de données avec un dispositif externe (D), comprenant les étapes de :
- définir dans la mémoire vive une unique zone dédiée (7) aux données échangées,
- commander l'unité de traitement pour enregistrer les données échangées dans cette zone et pour limiter le risque que ladite zone dédiée contienne des données nuisibles pour la sécurité de la carte,
**caractérisé en ce que** la limitation du risque que la zone contienne des données nuisibles comprend une phase de brouillage des données de la zone de mémorisation dédiée (7) avant un transfert de données depuis l'extérieur afin que des données successives reçues par la carte ne puissent être recombinées ou utilisées pour former une instruction malveillante.

6. Procédé de gestion selon la revendication 5, dans lequel la limitation du risque que la zone contienne des données nuisibles comprend une phase de verrouillage de l'accès à la zone de mémorisation dédiée (7) lors d'une opération de traitement afin que des données secrètes ou sensibles ne puissent être transmises à l'extérieur par la carte.

7. Procédé de gestion selon la revendication 6, dans lequel la limitation du risque que la zone contienne des données nuisibles comprend les phases d'évaluer un état des données de la zone de mémorisation dédiée (7) avant de réaliser une opération de traitement et de vérifier l'intégrité des données après l'opération de traitement.

8. Procédé de gestion selon la revendication 6, dans lequel la limitation du risque que la zone contienne des données nuisibles comprend la phase de vérifier avant une émission d'une donnée que la donnée est contenue dans la zone de mémorisation dédiée (7).

## Claims

1. An integrated circuit card including a processor unit (3) associated with RAM (5) and with data exchange means (6) for exchanging data with an external device (D), wherein the RAM includes a unique memory zone (7) dedicated to exchanged data, and wherein the processor unit is arranged to store the exchanged data in the dedicated memory zone and to limit any risk of said dedicated memory zone containing data that is harmful for the security of the card, the card being **characterized in that** the processor unit (3) is programmed to scramble the data contained in the dedicated memory zone (7) before transferring data from the outside in order that data received on successive occasions by the card cannot be recombined or used to constitute harmful instructions.

2. An integrated circuit card according to claim 1, wherein the processor unit (3) is programmed to lock access to the dedicated memory zone (7) during a processing operation in order that secret or sensitive data cannot be transmitted to the outside by the card.

3. A card according to claim 2, wherein the processing unit (3) is programmed to calculate an integrity value of the data in the dedicated memory zone (7) before performing a processing operation, and to verify the integrity value of the data after performing the processing operation.

4. A card according to claim 1, wherein, before transmitting data, the processor unit (3) is programmed to verify that the data is contained in the dedicated memory zone (7).

5. A method of managing RAM (5) of an integrated circuit card (2) having a processor unit (3) associated with the RAM and with data exchange means (6) for exchanging data with an external device (D), wherein the method comprises the steps of:
· defining in the RAM a unique dedicated zone (7) that is dedicated to the exchanged data;
· controlling the processor unit to store the exchanged data in said zone and to limit any risk of said dedicated zone containing data that is harmful for the security of the card, **characterized in that** the limitation of the risk that the zone contains data that is harmful comprises a stage of scrambling the data in the dedicated memory zone (7) before transferring data from the outside in order that data received on successive occasions by the card cannot be recombined or used to constitute harmful instructions.

6. A method according to claim 5, wherein the limitation of the risk that the zone contains data that is harmful includes a stage of locking access to the dedicated memory zone (7) during a processing operation in order that secret of sensitive data cannot be transmitted to the outside by the card.

7. A method according to claim 6, wherein the limitation of the risk that the zone contains data that is harmful includes the stages of evaluating a status of the data in the dedicated memory zone (7) before performing a processing operation, and of verifying the integrity of the data after performing the processing operation.

8. A method according to claim 6, wherein, prior to transmitting data, the limitation of the risk that the zone contains data that is harmful includes a stage of verifying that the data is contained in the dedicated memory zone (7).

## Patentansprüche

1. Integrierte Leiterplatte, umfassend eine Verarbeitungseinheit (3), die mit einem Schreib-Lese-Speicher (5) und mit Mitteln zum Austausch (6) von Daten mit einer externen Vorrichtung (D) verbunden ist, wobei der Schreib-Lese-Speicher eine einzige Speicherzone (7) aufweist, die den ausgetauschten Daten zugeordnet ist, und wobei die Verarbeitungseinheit ausgebildet ist, um in der zugeordneten Speicherzone die ausgetauschten Daten zu erfassen und um das Risiko, dass die besagte Speicherzone für die Sicherheit der Karte schädliche Daten enthält, zu begrenzen, wobei die Karte **dadurch gekennzeichnet ist, dass** die Verarbeitungseinheit (3) programmiert ist, um die Daten der zugeordneten Speicherzone (7) vor einer Datenübertragung von außen zu verwürfeln, damit Daten, die von der Karte sukzessiv empfangen werden, nicht wieder kombiniert oder verwendet werden können, um eine schädliche Anweisung zu erzeugen.

2. Integrierte Leiterplatte nach Anspruch 1, bei der die Verarbeitungseinheit (3) programmiert ist, um den Zugang zur zugeordneten Speicherzone (7) während einer Verarbeitungsoperation zu verriegeln, damit geheime oder sensible Daten nicht durch die Karte nach außen übertragen werden können.

3. Karte nach Anspruch 2, bei der die Verarbeitungseinheit (3) programmiert ist, um für die Daten der zugeordneten Speicherzone (7) vor Durchführen einer Verarbeitungsoperation eine Integrität zu berechnen und um die Integrität der Daten nach der Verarbeitungsoperation zu verifizieren.

4. Karte nach Anspruch 1, bei der die Verarbeitungseinheit (3) programmiert ist, um vor einer Ausgabe eines Datums zu verifizieren, dass das Datum in der zugeordneten Speicherzone (7) enthalten ist.

5. Verfahren zum Verwalten eines Schreib-Lese-Speichers (5) einer integrierten Leiterplatte (2), die eine Verarbeitungseinheit (3) umfasst, mit der der Schreib-Lese-Speicher und Mittel zum Austausch (6) von Daten mit einer externen Vorrichtung (D) verbunden sind, umfassend die folgenden Schritte:
- im Schreib-Lese-Speicher eine einzige den ausgetauschten Daten zugeordnete Zone (7) zu definieren,
- die Verarbeitungseinheit zu steuern, um die ausgetauschten Daten in dieser Zone zu speichern und um das Risiko zu begrenzen, dass die besagte zugeordnete Zone Daten enthält, die für die Sicherheit der Karte schädlich sind,
**dadurch gekennzeichnet, dass** die Begrenzung des Risikos, dass die Zone schädliche Daten enthält, eine Phase des Verwürfelns der Daten der zugeordneten Speicherzone (7) vor einer Datenübertragung von außen umfasst, damit Daten, die von der Karte sukzessiv empfangen werden, nicht wieder kombiniert oder verwendet werden können, um eine schädliche Anweisung zu erzeugen.

6. Verwaltungsverfahren nach Anspruch 5, bei dem die Begrenzung des Risikos, dass die Zone schädliche Daten enthält, eine Phase des Verriegelns des Zugangs zur zugeordneten Speicherzone (7) bei einer Verarbeitungsoperation umfasst, damit geheime oder sensible Daten nicht durch die Karte nach außen übertragen werden können.

7. Verwaltungsverfahren nach Anspruch 6, bei dem die Begrenzung des Risikos, dass die Zone schädliche Daten enthält, die Phasen des Evaluierens eines Zustands der Daten der zugeordneten Speicherzone (7) vor Durchführen einer Verarbeitungsoperation und des Verifizierens der Integrität der Daten nach der Verarbeitungsoperation umfasst.

8. Verwaltungsverfahren nach Anspruch 6, bei dem die Begrenzung des Risikos, dass die Zone schädliche Daten enthält die Phase umfasst, vor einer Ausgabe eines Datums zu verifizieren, dass das Datum in der zugeordneten Speicherzone (7) enthalten ist.
